# EUROPEAN PATENT SPECIFICATION

(11) **EP 3 031 091 B1**
(45) Date of publication and mention of the grant of the patent: **17.10.2018**
(21) Application number: 14750609.1
(22) Date of filing: 05.08.2014
(51) Int. Cl.: H01M 4/38, H01M 10/0525, H01M 4/02, H01M 4/134, H01M 4/36, H01M 4/587, H01M 4/62

(54) **STRUCTURED PARTICLES**
STRUKTURIERTE TEILCHEN
PARTICULES STRUCTURÉES

(30) Priority: 05.08.2013 GB 201313981
(43) Date of publication of application: 15.06.2016
(73) Proprietor: Nexeon Limited, Abingdon Oxfordshire OX14 4SB (GB)
(72) Inventor: FRIEND, Christopher Michael, Abingdon Oxfordshire OX14 4QD (GB)
(74) Representative: Carpmaels & Ransford LLP
(86) International application number: PCT/GB2014/052398
(87) International publication number: WO 2015/019076

(56) References cited:
- EP-A1- 2 509 142

## Description

### Field of the Invention

The present invention relates to particles comprising a body pierced by a number of large pores, a method of making said particles and use of said particles in a rechargeable metal ion battery.

### Background of the Invention

Rechargeable lithium-ion batteries are extensively used in portable electronic devices such as mobile telephones and laptops, and are finding increasing application in electric or hybrid electric vehicles. However, there is an ongoing need to provide batteries that store more energy per unit mass and / or per unit volume. In mobile devices, volumetric energy capacity is important whilst in automotive applications, gravimetric energy capacity and charge/discharge rate performance is more typically important.

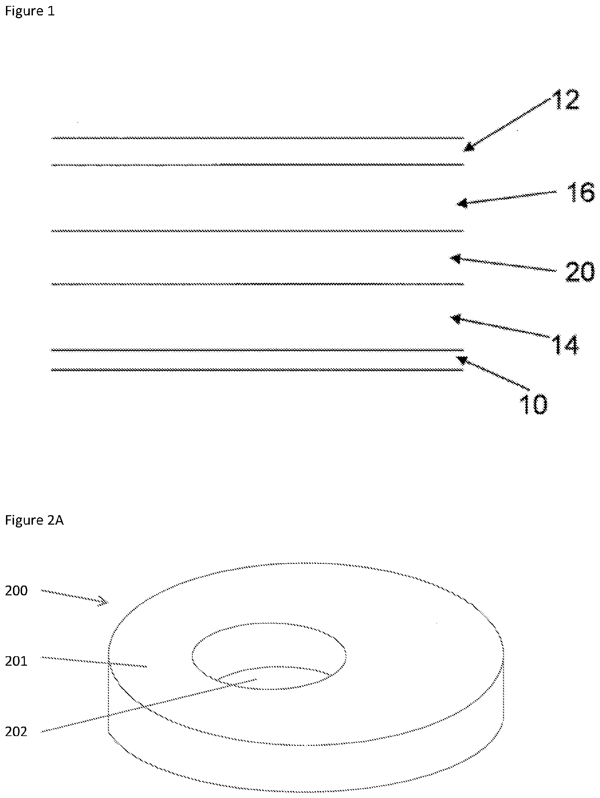

The structure of a conventional lithium-ion rechargeable battery cell is shown in Fig. 1. The battery cell includes a single cell but may also include more than one cell. Batteries of other metal ions are also known, for example sodium ion and magnesium ion batteries, and have essentially the same cell structure.

The battery cell comprises a current collector for the anode 10, for example copper, and a current collector for the cathode 12, for example aluminium, which are both externally connectable to a load or to a recharging source as appropriate. A composite anode layer 14 overlays the current collector 10 and a lithium containing metal oxide-based composite cathode layer 16 overlays the current collector 12 (for the avoidance of any doubt, the terms "anode" and "cathode" as used herein are used in the sense that the battery is placed across a load - in this sense the negative electrode is referred to as the anode and the positive electrode is referred to as the cathode).

The cathode comprises a material capable of releasing and reabsorbing lithium ions for example a lithium-based metal oxide or phosphate, LiCoO₂, LiNi_{0.8}Co_{0.15}Al_{0.05}O₂, LiMnₓNiₓCO₁₋₂ₓO₂ or LiFePO₄.

A porous plastic spacer or separator 20 is provided between the graphite-based composite anode layer 14 and the lithium containing metal oxide-based composite cathode layer 16. A liquid electrolyte material is dispersed within the porous plastic spacer or separator 20, the composite anode layer 14 and the composite cathode layer 16. In some cases, the porous plastic spacer or separator 20 may be replaced by a polymer electrolyte material and in such cases the polymer electrolyte material is present within both the composite anode layer 14 and the composite cathode layer 16. The polymer electrolyte material can be a solid polymer electrolyte or a gel-type polymer electrolyte and can incorporate a separator.

When the battery cell is fully charged, lithium has been transported from the lithium containing metal oxide cathode layer 16 via the electrolyte into the anode layer 14. In the case of a graphite-based anode layer, the lithium reacts with the graphite to create the compound, LiC₆. The graphite, being the electrochemically active material in the composite anode layer, has a maximum capacity of 372 mAh/g. ("active material" or "electroactive material" as used herein means a material which is able to insert into its structure, and release therefrom, metal ions such as lithium, sodium, potassium, calcium or magnesium during the respective charging phase and discharging phase of a battery.

Preferably the material is able to insert and release lithium.)

The use of a silicon-based active anode material is also known in the art. Silicon has a substantially higher maximum capacity than graphite. However, unlike active graphite which remains substantially unchanged during insertion and release of metal ions, the process of insertion of metal ions into silicon results in substantial structural changes, accompanied by substantial expansion. For example, insertion of lithium ions into silicon results in formation of a Si-Li alloy. The effect of Li ion insertion on the anode material is described in, for example, "Insertion Electrode Materials for Rechargeable Lithium Batteries", Winter et al, Adv. Mater. 1988, 10, No. 10, pages 725-763.

EP 2 509 142 A1 discloses porous silicon particles with a plurality of voids therein.

### Summary of the Invention

In a first aspect the invention provides a powder comprising pierced particles for use as an active component of a metal ion battery, the pierced particles each comprising a particle body and at least one passage extending through the particle body; wherein the pierced particles have an average aspect ratio of at least 3: 1, an average thickness of no more than 3 µm, and the passages have an average width of at least 30 nm; and wherein the pierced particles comprise an electroactive material selected from silicon and germanium.

In a second aspect the invention provides a composition comprising a powder according to the first aspect and at least one further component.

In a third aspect the invention provides a slurry comprising a solvent and a powder according to the first aspect or a composition according to the second aspect.

In a fourth aspect the invention provides an electrode comprising a composition according to the second aspect.

In a fifth aspect the invention provides a metal ion battery comprising an anode, a cathode and an electrolyte between the anode and cathode wherein the anode comprises a powder according to the first aspect or a composition according to the second aspect.

In a sixth aspect the invention provides a method of forming a metal ion battery according to the fifth aspect comprising the step of forming the anode by depositing a slurry according to third aspect and evaporating the solvent.

In a seventh aspect the invention provides a method of forming a powder according to the first aspect comprising the step of piercing particles of a starting material powder to form the pierced particles.

In an eighth aspect the invention provides a method of forming a powder according to the first aspect comprising the step of forming a film comprising passages extending through the film, and breaking the film to form the pierced particles.

In a ninth aspect the invention provides a particle for use as an active component of a metal ion battery, the particle comprising a particle body and at least one passage extending through the particle body, wherein the particle has an average thickness of no more than 3 µm, wherein the pierced particles have an aspect ratio of at least 3: 1, and the or each passage has a width of at least 30 nm, wherein the particle comprises an electroactive material selected from silicon and germanium.

### Description of the Drawings

The invention will now be described in more detail with reference to the drawings wherein:
Figure 1 is a schematic illustration of a lithium ion battery;
Figure 2A is a schematic illustration of a first example of a pierced particle according to the present invention;
Figure 2B is a schematic illustration of a second example of a pierced particle according to the present invention;
Figure 2C is a schematic cross sectional illustration of a third example of a pierced particle according to the present invention;
Figure 2D is a schematic cross sectional illustration of a fourth example of a pierced particle according to the present invention; and
Figure 2E is a schematic cross sectional illustration of a fifth example of a pierced particle according to the present invention; and
Figure 2F is a schematic cross sectional illustration of a sixth example of a pierced particle according to the present invention.

### Detailed Description of the Invention

The invention is described herein with reference to lithium ion batteries and insertion and desorption of lithium ions, however it will be appreciated that the invention may be applicable to other metal ion batteries, for example sodium, potassium or magnesium ion batteries.

The invention provides a powder comprising pierced particles, each particle pierced through by a relatively small number of relatively large passages, suitable for use as the active material in an electrochemical cell. Preferably the pierced particles are flakes with a micron or sub-micron thickness.

### Pierced particle structure

"Pierced particles" as used herein means particles each comprising a body of material pierced by at least one open-ended passage penetrating entirely through the body. This includes, for example, a continuous void or channel with one end opening onto a first surface of the particle and the other end opening onto a different surface of the particle. It is to be understood that the passage may vary in shape or area along its length as it passes through the body. Preferably the pierced particles are pierced flake-like or ribbon-like particles each comprising a flake or ribbon of material pierced by at least one passage. Preferably, the at least one passage penetrates entirely through the thickness of the flake or ribbon. The passages are such that they allow the transport or flow of a liquid into, through and out of the body of the particles.

The pierced particles comprise an electroactive material selected from silicon and germanium.

One exemplary electroactive material is silicon which can insert and release metal ions, such as lithium ions. The insertion of lithium ions into silicon or another electroactive material can be described as lithiation and the removal of the lithium can be described as delithiation.

Silicon and germanium undergo expansion during insertion of metal ions. The expansion may be due to structural changes of the anode caused by formation of an alloy of the active material and the metal ions, for example a Si-Li alloy formed by insertion of lithium ions into silicon. The volume of silicon and germanium upon metallation, e.g. lithiation, to their maximum capacity may be at least 20% larger than their volume when substantially unmetallated. The volume change of an active
material upon metallation to its maximum capacity may be determined by computer modelling.

The volumetric energy capacity of the particles in the fully charged state (as distinct from the capacity of a composite electrode containing the particles and further components) is preferably at least 1500 mAh/cm³, more preferably at least 2000 mAh/cm³.

With reference to Figure 2A, in a first example a pierced particle 200 may comprise a core or body 201 pierced by a hole forming a passage 202 extending entirely through the thickness of the body 201. Generally, the passage 202 will link opposed surfaces of the body 201.

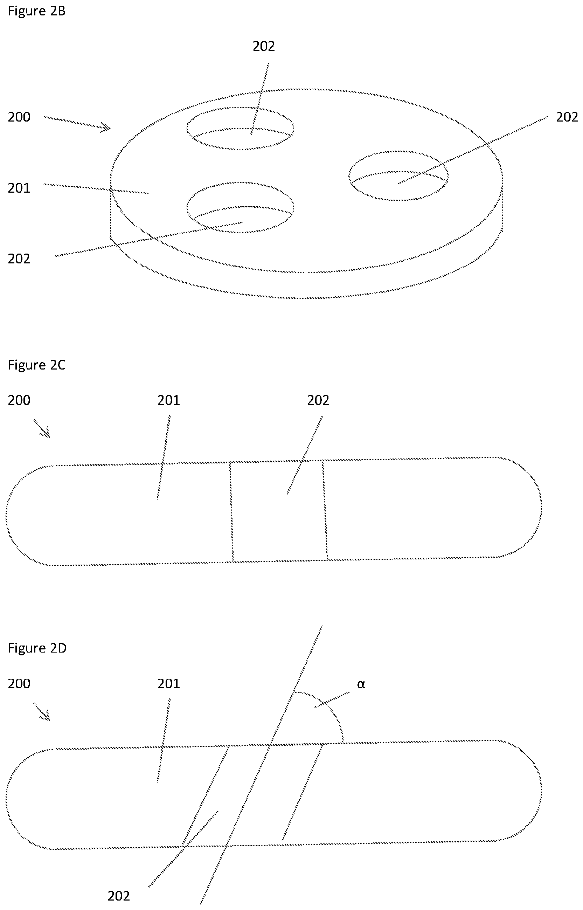

The number of passages 202 passing through the body 201 may vary. Figure 2B shows a second example of a pierced particle 200 pierced by three separate passages 202. Other examples of the pierced particles may comprise different numbers of passages.

The pierced particles 200 may each comprise a body 201 pierced by a small number of relatively large passages 202, in contrast to a conventional porous material wherein the body has a relatively large number of relatively small pores that do not pierce the thickness of the body. The pierced particles 200 may each comprise passages and pores that do not pierce the thickness of the particle.

In one example the passages 202 are substantially circular in cross section with a diameter of at least 30nm.

The passages 202 may extend substantially perpendicular to the opposed surfaces of the body 201 between which the passages 202 extend, as illustrated in cross section in the third example of Figure 2C. Alternatively, the passages 202 may extend at an angle θ that is less than 90 degrees to the surface, as illustrated in cross section in the fourth example of Figure 2D. Each opening of a passage may be an opening contained by a facet of the pierced particle, or may extend across an edge between two facets of the pierced particle.

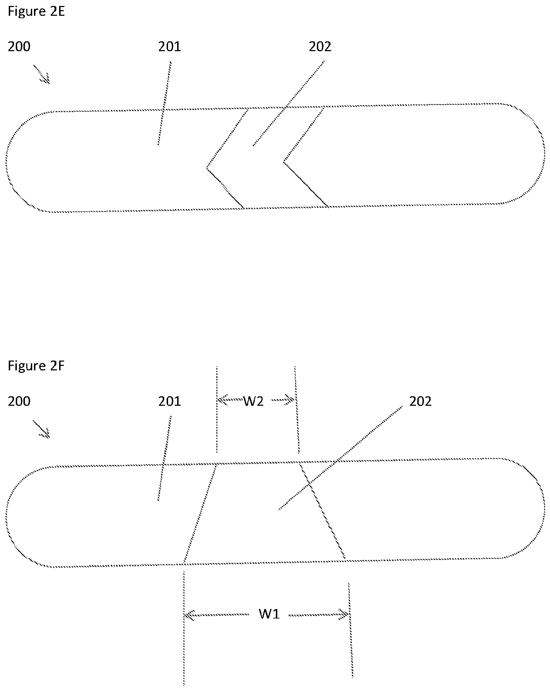

The passages 202 may include one or more kinks or changes in direction along their length, as shown in cross section in the fourth example of Figure 2E.

The shape and/or cross sectional area of the passages 202 may be substantially constant along the length of the passages 202, or in other words, through the entire thickness of the body 201 of the pierced particle 200, or the shape and/or cross sectional of the passages 202 may vary along their length. For example, a passage 202 may be a tapered structure having a width W1 at one end that is larger than a width W2 at the other end of the passage 202, as illustrated in the fifth example of Figure 2F.

In the illustrated examples the bodies and passages are shown as being substantially circular. This is merely for ease and clarity of illustration and is not essential. Other shapes of body and passage may be used. In practice, in some examples the shapes of the bodies and the shapes of the passages may be determined by the processes used to produce the pierced particles.

In the illustrated examples the passages are shown as being single passages. This is merely for ease and clarity of illustration and is not essential. Passages with a branched structure may be used. Passages may have multiple branches and some branches may rejoin or connect with other branches. In practice, in some examples the presence or absence of branches in the passages may be determined by the processes used to produce the pierced particles.

The pierced particles may be used to form an anode of a lithium ion battery. Such an anode will be formed by a volume of the pierced particle material comprising a individual pierced particles.

The passages through the pierced particles increase the surface area of electroactive material in the pierced particles that can be contacted with the electrolyte in the battery, compared to similarly sized unpierced particles. This increases the rate at which the lithium ions (or other metal ions) can be inserted into the electroactive material and aids the uniform insertion density of metal ions throughout the active material. The size and number of passages may be selected to maintain surface area within a desired range.

Additionally, in a cell with liquid electrolyte, having passages which pass entirely through the pierced particles allows movement and mixing of the liquid electrolyte, preventing the liquid electrolyte within the passage becoming isolated from the main volume of the liquid electrolyte, as could happen to liquid electrolyte within a cavity with only one open end in the body of a particle.

In operation of the anode of a lithium ion battery (i.e. during charging and/or discharging of the battery), lithium ions are inserted into the electroactive material of the pierced particles during charging (lithiation) and are released during discharge of the battery (delithiation). During charging there may be a significant expansion in the volume of the electroactive material due to the incorporation of lithium ions and during discharge there is a corresponding contraction of the material volume due to delithiation.

The passages through the bodies of the pierced particles provide void spaces which allow at least a part of the volume expansion of the electroactive material making up the body as a result of lithiation during charging to be accommodated. This may reduce the degree of expansion of the exterior surfaces of the bodies of the pierced particles, and therefore the degree of expansion of the anode as a whole, since some of the expansion is accommodated by the void space. This may reduce mechanical stress and resultant damage caused by repeated expansion and contraction during charging and discharging cycles. Additionally, this may reduce the mechanical stress experienced by the pierced particles individually as a result of their own expansion and contraction during repeated charging and discharging that could otherwise lead to cracking and / or disintegration of the particles.

Additionally, in a cell with liquid electrolyte, by providing passages wide enough that when the electroactive material of the pierced particles is fully lithiated and fully expanded, space remains within them such that the electrolyte can remain in contact with both the external surface of the body of the pierced particle and also with the internal surface of the passage without being squeezed out, then lithium loss during cycling can be reduced. For example, if there is not enough space within the void space provided by the passage to accommodate the full inward expansion of the electroactive material during charge then the liquid electrolyte will be forced away from the internal particle surface provide by the passage. In this case, during discharge it may be more difficult for all the lithium to be released and some could remain trapped in the electroactive material of the pierced flake particle. Also, if the rate of release of the metal ions varies throughout the electroactive material of the particle, peak mechanical stresses on contraction could increase, leading to fracture of the electroactive material.

In one preferred arrangement, the passage or passages through a pierced particle are substantially perpendicular to one or more surfaces of the particle core; are unbranched and are substantially straight.

A distribution of the particle sizes of a powder of the pierced particles, or the starting material particles used to form the pierced particles, may be measured by laser diffraction, in which the particles being measured are typically assumed to be spherical, and in which particle size is expressed as a spherical equivalent volume diameter, for example using the Mastersizer™ particle size analyzer available from Malvern Instruments Ltd. A spherical equivalent volume diameter is the diameter of a sphere with the same volume as that of the particle being measured. If all particles in the powder being measured have the same density then the spherical equivalent volume diameter is equal to the spherical equivalent mass diameter which is the diameter of a sphere that has the same mass as the mass of the particle being measured. For measurement the powder is typically dispersed in a medium with a refractive index that is different to the refractive index of the powder material. A suitable dispersant for powders of the present invention is water. For a powder with different size dimensions such a particle size analyser provides a spherical equivalent volume diameter distribution curve.

Size distribution of particles in a powder measured in this way may be expressed as a diameter value Dn in which at least n % of the volume of the powder is formed from particles have a measured spherical equivalent volume diameter equal to or less than D.

An example measurement system for measuring the shapes and dimensions of particles in a powder of pierced particles or a powder of starting material particles using an optical microscope or SEM with digital image processing is Morphologi™, also available from Malvern Instruments Ltd. In this technique a 2D projection of the area of each particle is captured and the particle dimensions and shape can be measured and classified.

The pierced particles have a D₅₀ preferably less than less than 50µm, and/or have an average largest dimension preferably less than 40 µm. More preferably, the pierced particles have a D₅₀ in the range of 0.5µm to 30µm. Preferably the pierced particles have a D₉₀ of less than 50µm. Preferably the pierced particles have a D₁₀ of at least 0.1 µm.

The pierced particles can be characterised both in terms of their external dimensions and their intra-particle dimensions; the external dimensions being distances between points on the outermost external surfaces of the particle and the intra particle dimensions characterising the size of features within a surface or volume of the particle, such as the dimension of a passage, a void or pore, or the width of a wall between two passages or pores. The external dimensions of a particle may be characterised in terms of three dimensions that are orthogonal to each other, referred to as first, second and third dimensions.

The pierced particles may have an average first dimension (as measured along a single direction across the pierced flake particle) of no more than 3 µm, preferably no more than 2 µm, preferably no more than 1 µm, preferably no more than 500 nm, and preferably no more than 300 nm. The average first dimension is preferably greater than 10 nm, optionally greater than 30 nm, optionally at least 50 nm. Second and third dimensions of the pierced particles, which are orthogonal to the first dimension, may on average each be at least twice as large the first dimension, and preferably each at least three times as large as the first dimension.

Substantially all of the pierced particles in the composition may have at least one average external dimension of 3 µm or less. Without wishing to be bound by any theory, for silicon-comprising particles it is believed that this will help to prevent or reduce the formation of the crystalline Li₁₅Si₄ phase during charging/discharging of the material in a lithium-ion cell which may improve the mechanical robustness of the silicon during cycling (see for example Hatchard et al., J. Electrochem. Soc. 151, A838, 2004).

Where the pierced particle has a flake-like or ribbon-like shape, the first dimension can be considered to be the thickness of a pierced flake or ribbon-like particle (being the smallest external dimension), while the second and third orthogonal dimensions can be regarded as the width and length respectively of the pierced flake or ribbon-like particle. For a ribbon-like particle the length is larger than width. For a flake-like particle the length may be the same or similar size as the width or larger only by a relatively small amount.

The aspect ratio of a particle having external dimensions of length L, width W and thickness T is a ratio of the length L to thickness T (L : T) of the particle. The pierced particles have an average aspect ratio of at least 3:1, optionally at least 5:1, and preferably less than 100:1. The average W : T ratio may also be at least 3 : 1. Preferably, the length, width and thickness of the particles provide a flake-like structure or a ribbon, rather than a fibre-like or rod-like structure in which the width and thickness of the particles are similar. A high aspect ratio of the pierced particles may improve electrical connectivity within a composite material used in a battery as compared to a material with a lower aspect ratio.

The average second dimension : third dimension ratio (i.e. the width W to thickness, L : T) of the pierced particles may be in the range of about 1 : 1 to 1 : <10, preferably about 1 : 1 to 1 : 5, or 1 : 1 to 1 : 3.

The aspect ratio and the second dimension : third dimension ratio may be selected to as to provide a flake-like structure.

A pierced particle having a high aspect ratio (relatively small thickness dimension) may enable higher lithiation of the active material in the particle without risk of cracking the particle, increasing the potential capacity of the pierced particle. It may also increase the attainable charge rate for high capacity anodes as the diffusion length (into the electroactive material) for metal ions is reduced. Particles of this shape also have a higher maximum packing density (and therefore a lower total inter-particle void volume) in a composition comprising a plurality of such particles. This may enable a higher overall volumetric energy density of an electrode comprising such particles compared, for example, to a composition comprising spherical particles having the same intra-particle porosity as the pierced particles.

The pierced particles may have an average smallest dimension of no more than 1 µm. The smallest dimension of a pierced particle may be an external dimension of the pierced particle, particularly thickness as described herein, or may be an internal or intra-particle dimension of the pierced particle, particularly a thickness of a wall of the pierced particle separating adjacent passages, optionally a wall thickness of less than 0.5µm or less than 0.3µm, but preferably more than 5 nm, or more than 20nm, more preferably more than 50nm. If the average thickness or external first dimension of the pierced particles is more than 300 nm then preferably, the majority (more than half) of walls (between adjacent passages) within the particle are less than 300nm, more preferably less than 200nm and most preferably less than 100 nm.

The passages may be arranged to pass through the pierced particles substantially in the direction of the first dimension (i.e. the thickness direction of a flake or ribbon). Where the pierced particles have a flake or ribbon shape the passages may be arranged to pass through the thickness of the pierced flake or ribbon particles.

The passages have an average width of at least 30 nm, preferably more than 50 nm or more than 100 nm or more than 250 nm. The passages may have an average width of no more than 5 µm, preferably no more than 2 µm, optionally no more than 0.5 µm. In examples where the passages are circular in cross section this width will be a diameter. As explained above, the passages pass entirely through the pierced particles, so the length of the passages will depend upon the thickness of the pierced particles, and the geometry of the passages relative to the external surfaces of the pierced particles. The width of a passage may suitably be defined as the diameter of a circle having area equivalent to the cross sectional area of the passage opening.

The volume of the passages may make up no more than 80 % of the total volume of corresponding unpierced particles, and preferably less than 75 % or less than 50 % of the total volume of the unpierced particles. Preferably, the passages form at least 10 % of the volume of the unpierced particles. Preferably, the volume of the passages makes up 10-50 % of the volume of the pierced particles.

The number density of passages is defined as the number of passages entering or leaving a region on the surface of a particle per unit surface area. The number density of passages for the pierced particles of the invention is preferably less than 500 /µm², or less than 400 /µm², or less than 300/µm², or less than 200 /µm², or less than 100 /µm². The number density of passages may suitably be determined by measuring the number of passages entering or leaving a region on the surface of a particle with a fixed surface area, and calculating a mean average across at least ten particles. This can be calculated for example from SEM images of a powder sample, counting the number of passages found within 1 µm square zones on the surface of ten or more particles.

If the pierced particles are formed by forming passages in unpierced particles then the passages may be formed by removing no more than 80 % of the volume of the unpierced particles, and preferably less than 75 % or less than 50 % of the volume of the unpierced particles. Preferably at least 10 % of the volume of the unpierced particles is removed. Preferably, 10-50 % of the volume of the unpierced particles is removed. It will be appreciated that removal of a given volume percentage of a material, for example silicon, corresponds to removal of the same mass percentage of that material, and that a volume of the passages may be determined by measuring mass of the particles before and after piercing.

The total volume of the particles, and the volume of the passages, may be measured by measuring the dimensions of the particles and dimensions of the passages (surface area of the openings and lengths of passages) of a sample of the pierced particles.

The intrinsic porosity of the particles as specified herein is the total volume of the pores and voids within the pierced particles, including any surface pores that do not pierce the particles, but excluding fully enclosed pores which are not accessible to gas or liquid, expressed as a percentage of the total volume of the particles, including all voids, pores and solid material in the particles, but excluding any void space between particles. It can be measured by nitrogen gas absorption or mercury porosimetry and may be at least 10% and less than 90%. Preferably the intrinsic porosity of a powder of pierced particles is less than 85 %. A particularly preferred range for the intrinsic porosity of the powder is 20-80%, more preferably 50-80%. It will be appreciated that the porosity of the particles will fall upon metallation of the particles. Porosity of the particles following metal insertion may be at least 30 % or at least 50 % lower than the intrinsic porosity of the particles.

The specific surface area of the pierced particles may be measured by various techniques including BET (e.g. using known nitrogen gas adsorption techniques) and laser diffractometry. The specific surface area of the pierced particles measured using the BET (Brunauer, Emmett and Teller) technique may be less than 200 m²/g, preferably less than 100 m²/g, preferably less than 60 m²/g, more preferably less that 30 m²/g, and most preferably less than 15 m²/g. Further, the BET of the pierced particles is preferably at least 0.1 m²/g, and more preferably at least 1 m²/g.

A higher specific surface area promotes the interaction of the metal ions with the active material, aiding a uniform insertion density of metal ions throughout the active material and enabling faster charge/discharge rates. However, if the specific surface area is too large then the charge capacity per unit mass and/or cycle life may be reduced through excessive formation of oxide prior to cell assembly and/or an SEI layer or electrolyte decomposition products on the surface of the active material, both during the first cycle but also during subsequent cycling. A high surface area also makes uniform dispersion without agglomeration of the particles within a composite layer more difficult to achieve. By selecting the shape and dimensions of the particles described herein and using the suitably sized channels to provide intrinsic porosity as well as electrolyte access, the surface area is maintained within an optimum range, compared, for example to prior art mesoporous spherical particles or nanoparticles agglomerates which can have a BET value far in excess of 100 m²/g, and avoids the difficulties encountered in achieving uniform dispersions of the particles within an electrode layer.

The dimensions of the pierced particles, including the external particle dimensions, aspect ratio, passage width and wall thickness, may be obtained by measuring images of the particles obtained by scanning electron microscopy. Average dimensions may be calculated as a number-weighted mean obtained, for instance, by measuring dimensions of each of a plurality of individual particles in a randomly selected area of a SEM image.

If the first external dimension (or thickness) of an individual particle varies along its length (the length being orthogonal to the first dimension) then the first dimension (or thickness) of that particle used in calculating an average first dimension is a mean average of the maximum and minimum first dimensions of that particle. For example, where the first dimension is a thickness, the thickness is taken as a mean average of the maximum and minimum thicknesses of the particle.

Second and third dimensions of an individual particle may be the shortest Feret diameter and longest Feret diameter respectively of the particle.

The pierced particles may be coated with a material different from the electroactive material making up the core, provided that the passages are not substantially blocked by the coating. Preferably any coating should be porous and/or leave at least a majority of the passages through the pierced particles unblocked. A coating may be provided, for example, to improve conductivity and/or to mitigate the formation of a Surface Electrolyte Interphase (SEI) layer.

A composition or powder comprising a plurality of pierced particles may be used in forming the anode of a lithium ion battery.

Random close packing (RCP) density of spheres is around 64%. RCP of disks is more than 80%, and so it will be appreciated that using flake-like or ribbon-like particles with a high aspect ratio can enable denser, closely packed coatings to be made which can then be further densified by rolling (calendering) to provide a high volumetric energy density of an electrode formed from this coating.

Furthermore, expansion of flake-like structures such as silicon flakes will predominantly take place radially, tending to keep the flake morphology which may help to maintain connectivity within the composite during cycling. The presence of the passages through the pierced particles may allow electrolyte access across the thickness of an electrode layer, even at high packing densities, and the passages may also provide expansion space during charging.

As the pierced particle comprises an electroactive material which undergoes a large volume expansion and contraction during operation, having at least one dimension of less than 3 microns, preferably less than 1 µm, may enable the particle to insert and release more lithium (or other metal ion) without cracking or fracture of the particle that may occur if larger pierced particles are used. A battery using these pierced particles as an active material may be charged to a higher capacity per unit mass or per unit volume than a battery comprising larger particles, with little or no loss of stability.

It may be easier to prepare thin composite anode coatings, for example a coating with an average thickness less than 60µm, with a uniform thickness and homogeneously dispersed components using pierced particles of this size. Thin anode coatings (or layers) may be required to balance the cathode in a cell which typically has a much lower
volumetric charge capacity than an anode comprising an electroactive material such as silicon. The thickness may be measured by observing cross sections of the anode coating produced using a microtome. The average thickness may also be calculated by measuring the mass of the anode coating per unit area if the densities and mass ratios of the components in the anode coating are known together with the coating porosity.

Preferably the plurality of pierced particles in a powder used to form a composite are substantially discrete from one another. A "discrete particle" as described herein means a particle that is not joined or bound to another particle. In a composite anode comprising a plurality of pierced particles, preferably during charging/discharging the relative movement from expansion and contraction of the electroactive material of each pierced particle is substantially independent of the movement from expansion and contraction of other nearby pierced particles.

Use of a composition containing pierced particles that remain substantially discrete from one another and/or experience relative movement during charging/discharging substantially independent of each other may reduce or eliminate the phenomenon of "lift" or "heave" resulting from expansion of an anode formed from a single block or interconnected mass of active material. Moreover, the use of discrete particles in an anode may provide good contact between the pierced particles and the electrolyte. It may be more difficult for the electrolyte to wet the surfaces of pierced particles in an interconnected mass. It may also be more difficult to disperse the active particles uniformly within an electrode slurry or composite if the pierced particles are not substantially discrete. It will be understood that the discrete pierced particles of a powder or composition may contain discrete pierced particles that may come into physical contact with each other and / or with other components, for example a binder or electrolyte, and that the discrete pierced particles may be contained within a matrix defined by a binder or other matrix material. The pierced particles may be joined to each other after formation of a coating or composite, for example, sintering of a layer of pierced particles may be performed to provide a self supporting sintered composite.

The pierced particles may provide advantages of high manufacturing yield and relatively low cost. Further, when used in a battery the relatively large through passages may allow better wetting of the electroactive material by the battery electrolyte. The material may provide a structure that minimises expansion during charging yet maintains a low BET value to keep first cycle loss low.

### Specific charge capacity of the pierced particles

The pierced particles preferably have a specific reversible charge capacity of at least 500 mAh per gram of pierced particle mass. The reversible charge capacity is the charge provided by discharge of the pierced particles in the anode of the cell after a full charge cycle. More preferably the pierced particles have a reversible charge capacity of at least 800 mAh/g, most preferably at least 1,000 mAh/g and especially at least 1,800 mAh/g. Preferably these reversible charge capacities are sustained for at least 50 charge/discharge cycles, more preferably at least 100 charge/discharge cycles, most preferably at least 200 charge/discharge cycles and especially at least 300 charge/discharge cycles.

### Pierced particle body

The pierced particle body may have any shape, including spheroidal (oblate and prolate), and irregular or regular multifaceted shapes (including cuboidal shapes). The particle body external surface or surfaces may be smooth, rough or angular and may be multifaceted or have a single continuously curved surface. A cuboidal particle body may be in the form of a flake, having a thickness that is substantially smaller than its length or width such that the core has only two major surfaces. A flake-like structure may provide for good electrical connectivity between particles during charging and discharging cycles. The surfaces of the pierced particle body may be rough or smooth.

It is preferable that the pierced particles have a low resistivity - this will increase the conductivity of composites containing them and improve the cycling performance and charge rate of a metal ion battery. Some high capacity electroactive materials such as silicon have a relatively high resistivity compared to that of lower capacity electroactive materials such as graphite or non active metallic materials such as copper, however with good electrode design, pierced particles with medium range resistivity values can be used. Preferably the pierced particle has a resistivity of no more than 1000 Ωcm, more preferably no more than 100 Ωcm, most preferably no more than 10 Ωcm, especially no more than 1 Ωcm. The pierced particle may have a resistivity of at least 1 x 10⁻⁵ Ωcm, for example at least 1 x 10⁻⁴ Ωcm or at least 5 x 10⁻⁴ Ωcm.

The pierced particle preferably comprises electroactive material having a resistivity of no more than 100 Ωcm, more preferably no more than 10 Ωcm, especially no more than 1 Ωcm. A pierced particle may comprising electroactive material having a resistivity of at least 1 x 10⁻⁴ Ωcm, for example at least 1 x 10⁻³ Ωcm or at least 1 x 10⁻² Ωcm.

The pierced particles can be made by forming the passages in a starting material initially lacking the passages or the passages can be made by forming electroactive material around void spaces or sacrificial filler/templating material during the process of forming the powder comprising pierced particles.

The starting material for the particle body or core is preferably in particulate form, for example a powder, and the particles of the starting material may have a shape corresponding to the desired particle body shape. For example, where the pierced particles are to be pierced flake particles having a flake like shape, the starting material should preferably be flake like in shape.

The starting material particles may comprise pores that do not pierce the particles Preferably, any pores present in the starting material are significantly smaller than the passages. Optionally, average pore size is no more than 10 nm. Average pore size may suitably be determined by mercury porosimetry.

A cuboid, multifaceted, flake-like, substantially spherical or spheroid starting material may be obtained by grinding a precursor material, for example doped or undoped silicon as described below, and then sieving or classifying the ground precursor material. Exemplary grinding methods include power grinding, jet milling or ball milling. Depending on the size, shape and form of the precursor material, different milling processes can produce particles of different size, shape and surface smoothness. Flake-like particles may also be made by breaking up / grinding flat sheets of the precursor material. The starting materials may alternatively be made by various deposition, thermal plasma or laser ablation techniques by depositing a film or particulate layer onto a substrate and by removing the film or particulate layer from the substrate and grinding it into smaller particles as necessary.

Samples or powders of the starting material particles may have D50 values as described above.

The starting material may comprise particles of substantially the same size.

Alternatively, the starting material may have a distribution of particle sizes. In either case, sieves and/or classifiers may be used to remove some or all starting materials having maximum or minimum sizes outside desired size limits.

The starting material (and the resultant pierced particles) may be silicon or germanium and alloys or oxides of silicon or germanium. Silicon starting material may be undoped silicon or doped silicon of either the p- or n-type or a mixture, such as silicon doped with germanium, phosphorous, aluminium, silver, boron and/or zinc. It is preferred that the silicon has some doping since it improves the conductivity of the silicon during the etching process as compared to undoped silicon. The starting material is optionally p-doped silicon having 10¹⁹ to 10²⁰ carriers/cc.

Silicon particles used to form the pierced particles may have a silicon-purity of 90.00% or over by mass, for example 95.0% to 99.99%, optionally 98% to 99.98%.

The starting material may be relatively high purity silicon wafers used in the semiconductor industry formed into granules. Alternatively, the granules may be relatively low purity metallurgical grade silicon, which is available commercially and which may have a silicon purity of at least 98%; metallurgical grade silicon is particularly suitable because of the relatively low cost and the relatively high density of defects (compared to silicon wafers used in the semiconductor industry). This leads to a low resistance and hence high conductivity, which is advantageous when the pierced particles are used as anode material in rechargeable cells. Impurities present in metallurgical grade silicon may include Iron, Aluminium, Nickel, Boron, Calcium, Copper, Titanium, and Vanadium, oxygen, carbon, manganese and phosphorus. Certain impurities such as Al, C, Cu, P and B can further improve the conductivity of the starting material by providing doping elements. Such silicon may be ground and graded as discussed above.

The starting material may be derived from Kerf (high purity single crystal waste silicon material from the manufacture of silicon wafers).

The granules used for etching may be crystalline, for example mono- or poly-crystalline (grain size more than 100nm) or nanocrystalline (grain size less than 100nm). The poly crystalline granules may comprise any number of crystals, for example two or more. Nanocrystalline granules having a grain size less than 60 nm are preferred.

If the silicon is not amorphous, preferably the silicon surfaces comprise {110} planes, i.e. a number of the grains present {110} surfaces or, if a single crystal, a {110} plane.

In one example the pierced particles are formed from silicon-comprising flakes or ribbons to provide pierced flake or ribbon particles comprising silicon.

The silicon-comprising flakes or ribbons may, for example, be formed by techniques including one or more of the following:
- Reduction of silica to silicon, for example reduction by calcium or magnesium. Silica particles, for example silica flakes or ribbons, may be reduced to form silicon particles having substantially the same dimensions and / or shape as the starting silica particles, or silica may be reduced to silicon followed by fracturing of the silicon into particles, e.g. flakes, having dimensions as described anywhere herein. The passages may be formed during the reduction process, may be created from the initial structure of the silica starting material or may be formed after the reduction process has been completed.
- Melt-spinning silicon-comprising ribbons or flakes and forming the passages therein (alternative melt-solidification processes capable of forming high aspect ratio silicon-comprising material can also be used);
- Gas injection into molten silicon to form a foam, which can then be broken up;
- Thermal deposition or electrodeposition of a silicon-comprising film, which can then be broken up, for example as described in WO 2013/024305, the contents of which are incorporated herein by reference. The passages can be formed after deposition (e.g. by etching) or during deposition. For example the film can be deposited as a porous film, or it can be deposited through a template (which blocks deposition of the film in selected regions). It can also be deposited onto a patterned substrate as further described below. The film can also be deposited with a plurality of sacrificial particles which are removed afterwards to form the passages;
- Electrospray deposition (or electrostatic assisted spraying) of a porous film comprising the active material (e.g. silicon, silica or tin);
- Electrochemical etching of a thin silicon film, for example as described in more detail below;

A patterned substrate may be used to form the pierced particles. In an embodiment, electroactive material may be deposited (e.g. by evaporation or electrodeposition) onto a substrate having pillars extending from the substrate surface, wherein the size and spacing of pillars corresponds to the desired size and spacing of passages of pierced particles. Electroactive material is deposited onto the substrate surface to form a film of the electroactive material pierced by the substrate pillars. The electroactive material may then be separated from the substrate and broken up, or broken up during separation from the substrate, to provide pierced particles of the electroactive material.

### Methods of passage formation

A first method of forming passages in particles to provide the pierced particles comprises a starting material being etched to form a pierced particle, wherein a starting material particle is exposed to an etching formulation for selective etching at the surface of the starting material particle to produce a pierced particle 200 having a body 201 pierced by a passage 202.

A suitable process for etching a material having silicon at its surface is metal-assisted chemical etching or MACE, which comprises deposition of metal nucleates (e.g. copper, silver, gold or platinum) on the silicon surface, for example by evaporation of the metal through a mask or electroless deposition of the metal from a source of metal ions followed by etching by exposure to a fluoride and an oxidant. An exemplary fluoride is HF. Exemplary oxidants are O₂; O₃; hydrogen peroxide; and the acid or salt of NO₃⁻, S₂O₈²⁻, NO₂⁻, B₄O₇²⁻ or ClO₄⁻, and mixtures thereof. More detail on MACE can be found in, for example, Huang et al., Adv. Mater. 23, pp 285-308 (2011), the contents of which are incorporated herein by reference.

Other etching processes that may be employed include reactive ion etching, and other chemical or electrochemical etching techniques, optionally using lithography to define the passages.

Passages may also be produced on the surface of and through the starting material using thermal plasma or laser ablation techniques, thermal migration techniques; selective stain etching; and/ or oxidation and etching.

One preferred example of a method of forming the pierced particles is to start with silica flakes or ribbons of the desired thickness.

These silica flakes or ribbons can be reduced to silicon flakes or ribbons of the desired thickness using known techniques, for example by reduction by calcium or magnesium.

The silicon flakes or ribbons can then be etched to form the passages by metal-assisted chemical etching to etch all the way through the flakes.

The MACE technique may use metal nucleates at a low density, keeping the metal nucleates scattered well apart, but relatively large in individual extent, for example at about 50 nm across.

In an alternative example a stain etch based process may be used instead of a MACE technique in combination with a template.

Other methods include the removal of sacrificial particles or regions of a different composition within the starting material to form the passages. One example is the selective etching of a silicon-comprising alloy to form the passages separated by silicon comprising walls.

A powder comprising pierced particles may consist essentially of the pierced particles or may contain unpierced particles. In the case where pierced particles are formed by piercing an unpierced particle starting material, the quantity of unpierced particles, if any, may depend on the method used to form the pierced particles. Preferably, at least 50% of particles of the powder are pierced.

### Applications

The pierced particles described herein may be used as an active component of an electrode, preferably an anode or negative electrode, of a metal ion battery, preferably a lithium ion battery, having a structure as described with reference to Figure 1.

A powder consisting essentially of the pierced particles may be provided, for example by any of the aforementioned processes. This powder may be mixed with other materials to form a composition suitable for use in forming the anode of a metal ion battery.

Other materials of this composition may include, without limitation, one or more of:
a solvent or solvent mixture for forming a slurry containing the pierced particles (as will be understood by the skilled person, the solvent or solvent mixture does not dissolve the pierced particles, and the term "solvent" as used herein should be construed accordingly); other active materials; conductive, non-active materials, for example conductive, non-active carbon fibres; binders; viscosity adjusters; fillers; cross-linking accelerators; coupling agents and adhesive accelerators.

A composite electrode comprising pierced particles will have a total electrode porosity made up of porosity provided by at least (a) porosity of the pierced particles, including porosity provided by passages through the particles and pores that do not extend through the particles, and (b) void space between components of the composite electrode. The total porosity of an electrode may suitably be determined by mercury porosimetry. Preferably the electrode porosity from the void space between components is less than 30%, or less than 20% of the total porosity in order to provide a high volumetric capacity electrode in which the bulk of the porosity is provided by the active material or materials, including the pierced particles. Preferably the electrode porosity from the void space between the components of the composite electrode is at least 1%, more preferably at least 5%.

The powder of pierced particles may be used as the only active component of an anode, or may be used in combination with one or more other active components. In one embodiment, the pierced particles are silicon-containing particles, and the pierced particles are mixed with an electroactive component formed from another material, for example graphite or graphene. Optionally, the anode contains 50-90 wt% of electroactive material particles. Optionally, pierced particles form 10-100wt% of the electroactive material particles.

Alternatively the powder of pierced particles may be used to supplement other electroactive materials. In one embodiment, silicon-containing pierced particles are combined with electroactive graphite particles in the electrode and form 1-20wt% of the total electroactive material.

Active materials other than pierced particles may be flake-like, particularly for use in combination with flake-like pierced particles. Flake-like graphite particles may have a length, height and thickness wherein both length and width of the particles are each independently on average at least 5 times, optionally at least 10 times, the thickness of the particles. Average thickness of graphite flakes may be in the range of less than 1 micron, optionally 75-300 nm. Average dimensions may be measured from an SEM image of a sample of the particles. An active graphite electrode may provide for a larger number of charge / discharge cycles without significant loss of capacity than an active silicon electrode, whereas a silicon electrode may provide for a higher capacity than a graphite electrode. Accordingly, a composition of a silicon-containing active material and a graphite active material may provide a lithium ion battery with the advantages of both high capacity and a large number of charge / discharge cycles. The use of pierced particles having at least one dimension less than 1 micron as described herein may be particularly advantageous in view of the greater capacity per unit volume or capacity per unit mass of such pierced particles as compared to larger pierced particles.

The volumetric electrode capacity in the charged state of a composite electrode comprising pierced particles is preferably at least 700 mAh/cm³, preferably at least 1000 mAh/cm³ or greater than 1500 mAh/cm³. The volumetric electrode capacity of a composite electrode is calculated as the charge stored by the composite electrode layer divided by the volume of the composite layer in the charged state, including the volume of any pores or voids contained within the composite. The volume of the composite layer does not include the volume of the current collector or other conductive substrate that supports the composite layer unless the substrate is contained within the composite layer.

The anode of a metal ion battery may be formed from a plurality of layers containing active materials wherein at least one of the layers contains pierced particles as described herein.

In order to form the anode of a battery, a slurry containing the pierced particles in a solvent or solvent mixture may be deposited on an anode current collector formed from a conductive material, for example copper, followed by evaporation of the solvent(s). The slurry may contain a binder material and any other active materials to be used in the anode. Exemplary binders include polyacrylic acid (PAA), polyvinylalcohol (PVA) and polyvinylidene fluoride (PVDF), carboxymethylcellulose (CMC), (styrene-butadiene rubber (SBR), alginates and metal ion salts thereof. A binder may also be a mixture of one or more polymers. Other materials that may be provided in the slurry include, without limitation, a viscosity adjuster, a filler, a cross-linking accelerator, a coupling agent and an adhesive accelerator. The components of the composite material are suitably mixed together to form a homogeneous composite electrode material that can be applied as a coating to a substrate or current collector to form a composite electrode layer.

The composite electrode material containing pierced particles may be porous to enable wetting of the active material by the electrolyte and to provide space to accommodate the expansion of active material during charge and prevent swelling of the electrode. The composite porosity may be defined as the total volume of pores, voids and empty spaces in the composite electrode material in the uncharged state before any electrolyte is added to or contacted with the composite material, divided by the total volume occupied by the composite material layer. It may be measured by, for example, mercury or nitrogen porosimetry.

However if the porosity is too high the mechanical integrity of the electrode may be affected and the charge capacity per unit volume (or mass) may be reduced A suitable level of porosity may depend on several factors including but not limited to composition, particle size, type of electrolyte / binder, layer thickness, and cell type /design. At least some of the porosity will be provided by the passages of the pierced particles. Preferably the total porosity of the composite in the uncharged state is at least 10%, more preferably at least 20% and especially 30%. Preferably the total porosity of the composite in the uncharged state is no more than 80%, more preferably no more than 60%.

The anode composite material layer may be any suitable thickness. The pierced particles of this invention are especially advantageous for making composite layers with an average thickness of less than 60µm or even less than 30µm (not including the thickness of the current collector). Preferably the composite layer thickness is at least 10µm, more preferably at least 12µm. The anode may comprise a composite layer deposited/attached on one or both sides of the current collector.

Examples of suitable cathode materials include LiCoO₂, LiCo_{0.99}Al_{0.01}O₂, LiNiO₂, LiMnO₂, LiCo_{0.5}Ni_{0.5}O₂, LiCo_{0.7}Ni_{0.3}O₂, LiCo_{0.8}Ni_{0.2}O₂, LiCo_{0.82}Ni_{0.18}O₂, LiCo_{0.8}Ni_{0.15}Al_{0.05}O₂, LiNi_{0.4}Co_{0.3}Mn_{0.3}O₂ and LiNi_{0.33}Co_{0.33}Mn_{0.34}O₂, LiFePO₄, LiVPO₄F, LiMn₂O₄, LiNi_{0.8}Co_{0.15}Al_{0.05}O₂, LiNi_{0.5}Co_{0.2}Mn_{0.3}O₂, xLi₂MnO₃(1-x)LiMO₂, Li₂FeS₂, vanadium oxides and sulphur based compounds. The cathode current collector is generally of a thickness of between 3 to 500µm. Examples of materials that can be used as the cathode current collector include aluminium, stainless steel, nickel, titanium and sintered carbon.

The electrolyte is suitably a non-aqueous electrolyte containing a lithium salt and may include, without limitation, non-aqueous electrolytic solutions, solid electrolytes and inorganic solid electrolytes. Examples of non-aqueous electrolyte solutions that can be used include non-protic organic solvents such as N-methylpyrrolidone, propylene carbonate, ethylene carbonate, fluoroethylene carbonate (FEC), difluoroethylene carbonate (DFEC), vinyl carbonate, vinylene carbonate (VC), vinylethylene carbonate, butylene carbonate, dimethyl carbonate, diethyl carbonate, gamma butyrolactone, 1,2-dimethoxyethane, 2-methyl tetrahydrofuran, dimethylsulphoxide, 1,3-dioxolane, formamide, dimethylformamide, acetonitrile, nitromethane, methylformate, methyl acetate, phosphoric acid trimester, trimethoxy methane, sulpholane, methyl sulpholane and 1,3-dimethyl-2-imidazolidione.

Examples of organic solid electrolytes include polyethylene derivatives polyethyleneoxide derivatives, polypropylene oxide derivatives, phosphoric acid ester polymers, polyester sulphide, polyvinyl alcohols, polyvinylidine fluoride and polymers containing ionic dissociation groups.

Examples of inorganic solid electrolytes include nitrides, halides and sulphides of lithium salts such as Li₅NI₂, Li₃N, LiI, LiSiO₄, Li₂SiS₃, Li₄SiO₄, LiOH and Li₃PO₄.

The lithium salt (or mixture of salts) is suitably soluble in the chosen solvent or mixture of solvents. Examples of suitable lithium salts include LiCl, LiBr, LiI, LiClO₄, LiBF₄, LiB₁₀C₂₀, LiPF₆, LiCF₃SO₃, LiAsF₆, LiSbF₆, LiAlCl₄, CH₃SO₃Li, Lithium bis(oxalato)borate (LiBOB), CF₃SO₃Li, and Lithium bis(fluorosulfonyl)imide (LiFSI).

Alternatively the electrolyte may comprise a room temperature ionic liquid.

Where the electrolyte is a non-aqueous organic solution, the battery is provided with a separator interposed between the anode and the cathode. The separator is typically formed of an insulating material having high ion permeability and high mechanical strength. The separator typically has a pore diameter of between 0.01 and 100 µm and a thickness of between 5 and 300 µm. Examples of suitable electrode separators include a micro-porous polyethylene film.

Preferably, electrodes comprising the pierced particles as an active material comprise a liquid or gelled liquid electrolyte that permeates substantially throughout the whole of the electrode layer using a network of pores and voids that include the channels within the pierced particles. Where the pierced particles comprise silicon, the electrolyte preferably comprises a fluorinated cyclic carbonate (for example FEC or DFEC) and/or a cyclic carbonate containing a vinyl group (for example VC).

In addition to lithium ion batteries, pierced particles as described herein may be used in solar cells (including solar capacitors), capacitors, filters, fuel cells, detectors and sensors.

Although the present invention has been described in terms of specific exemplary embodiments, it will be appreciated that various modifications, alterations and/or combinations of features disclosed herein will be apparent to those skilled in the art without departing from the scope of the invention as set forth in the following claims.

## Claims

1. A powder comprising pierced particles for use as an active component of a metal ion battery, the pierced particles each comprising a particle body and at least one passage extending through the particle body; wherein the pierced particles have an average aspect ratio of at least 3:1, an average thickness of no more than 3 µm, and the passages have an average width of at least 30 nm; and wherein the pierced particles comprise an electroactive material selected from silicon and germanium.

2. A powder according to claim 1 wherein the passages extend between opposed surfaces of the pierced particles.

3. A powder according to claim 1 or claim 2 wherein the pierced particles have an average thickness of at least 50 nm, and no more than 500 nm.

4. A powder according to any preceding claim wherein the passages have an average width of at least 100 nm; and/or wherein the passages make up no more than 50% of the volume of the pierced particles; and/or wherein the passages are separated by at least 1 µm.

5. A powder according to any preceding claim wherein the pierced particles have a flake-like form.

6. A powder according to any preceding claim wherein the pierced particles have an average largest dimension less than 40 µm.

7. A powder according to any preceding claim wherein the pierced particles have an average smallest external dimension of less than 1 µm.

8. A powder according to any preceding claim wherein a BET value of the pierced particles is at least 0.1 m²/g and less than 100 m²/g.

9. A composition comprising a powder according to any preceding claim and at least one further component, selected from:
(i) at least one further active component; and/or
(ii) at least one conductive, non-active component; and/or
(iii) a binder.

10. A composition according to claim 9, wherein the at least one further active component is graphite.

11. An electrode comprising a composition according to claim 9 or claim 10.

12. An electrode according to claim 11, wherein the pierced particles are silicon particles and wherein the electrode has a volumetric capacity in the charged state of at least 700 mAh/cc.

13. A metal ion battery comprising an anode, a cathode and an electrolyte between the anode and cathode wherein the anode comprises a powder according to any one of claims 1 to 8 or a composition according to claim 9 or claim 10.

14. A method of forming a metal ion battery according to claim 13 comprising the step of forming the anode by depositing a slurry comprising a solvent and a powder according to any of claims 1 to 8 or a composition according to claim 9 or claim 10 and evaporating the solvent.

15. A method of forming a powder according to any of claims 1 to 8 comprising the step of piercing particles of a starting material powder to form the pierced particles.

16. A method according to claim 15 wherein at least 50% of the total volume of the starting material powder is made up of starting material particles having a particle size of less than 50 microns as measured by a laser diffraction method in which the particles being measured are assumed to be spherical, and in which particle size is expressed as a spherical equivalent volume diameter.

17. A method of forming a powder according to any of claims 1 to 8 comprising the step of forming a film comprising passages extending through the film, and breaking the film to form the pierced particles.

18. A particle for use as an active component of a metal ion battery, the particle comprising a particle body and at least one passage extending through the particle body, wherein the particle has an average thickness of no more than 3 µm, an aspect ratio of at least 3:1, and wherein the or each passage has a width of at least 30 nm, wherein the particle comprises an electroactive material selected from silicon and germanium.

## Patentansprüche

1. Pulver, das durchlochte Teilchen umfasst, zur Verwendung als Aktivkomponente einer Metall-Ionen-Batterie, wobei die durchlochten Teilchen jeweils einen Teilchenkörper und mindestens einen sich durch den Teilchenkörper erstreckenden Kanal umfassen; wobei die durchlochten Teilchen ein durchschnittliches Aspektverhältnis von mindestens 3:1, eine durchschnittliche Dicke von höchstens 3 µm aufweisen und die Kanäle eine durchschnittliche Breite von mindestens 30 nm aufweisen; und wobei die durchlochten Teilchen ein elektroaktives Material aufweisen, das aus Silizium und Germanium gewählt ist.

2. Pulver nach Anspruch 1, wobei die Kanäle sich zwischen entgegengesetzten Oberflächen der durchlochten Teilchen erstrecken.

3. Pulver nach Anspruch 1 oder Anspruch 2, wobei die durchlochten Teilchen eine durchschnittliche Dicke von mindestens 50 nm und höchstens 500 nm aufweisen.

4. Pulver nach einem vorhergehenden Anspruch, wobei die Kanäle eine durchschnittliche Breite von mindestens 100 nm aufweisen; und/oder wobei die Kanäle höchstens 50 % des Volumens der durchlochten Teilchen ausmachen; und/oder wobei die Kanäle mindestens 1 µm voneinander getrennt sind.

5. Pulver nach einem vorhergehenden Anspruch, wobei die durchlochten Teilchen eine flockenähnliche Form aufweisen.

6. Pulver nach einem vorhergehenden Anspruch, wobei die durchlochten Teilchen eine durchschnittliche größte Abmessung von weniger als 40 µm aufweisen.

7. Pulver nach einem vorhergehenden Anspruch, wobei die durchlochten Teilchen eine durchschnittliche kleinste Abmessung von weniger als 1 µm aufweisen.

8. Pulver nach einem vorhergehenden Anspruch, wobei ein BET-Wert der durchlochten Teilchen mindestens 0,1 m²/g und weniger als 100 m²/g beträgt.

9. Zusammensetzung umfassend ein Pulver nach einem vorhergehenden Anspruch und mindestens eine weitere Komponente gewählt aus:
(i) mindestens einer weiteren Aktivkomponente; und/oder
(ii) mindestens einer leitfähigen, nicht aktiven Komponente; und/oder
(iii) einem Bindemittel.

10. Zusammensetzung nach Anspruch 9, wobei es sich bei der mindestens einen weiteren Aktivkomponente um Graphit handelt.

11. Elektrode, die eine Zusammensetzung nach Anspruch 9 oder Anspruch 10 umfasst.

12. Elektrode nach Anspruch 11, wobei die durchlochten Teilchen Siliziumteilchen sind und wobei die Elektrode im geladenen Zustand eine volumetrische Kapazität von mindestens 700 mAh/cm³ aufweist.

13. Metall-Ionen-Batterie umfassend: eine Anode, eine Kathode und ein Elektrolyt zwischen der Anode und Kathode, wobei die Anode ein Pulver nach einem der Ansprüche 1 bis 8 oder eine Zusammensetzung nach Anspruch 9 oder Anspruch 10 umfasst.

14. Verfahren zur Ausbildung einer Metall-Ionen-Batterie nach Anspruch 13, umfassend den Schritt: Ausbilden der Anode durch Abscheiden einer Suspension, die ein Lösungsmittel und ein Pulver nach einem der Ansprüche 1 bis 8 oder eine Zusammensetzung nach Anspruch 9 oder Anspruch 10 umfasst, und Verdampfen des Lösungsmittels.

15. Verfahren zur Ausbildung eines Pulvers nach einem der Ansprüche 1 bis 8, umfassend den Schritt: Durchlochen von Teilchen eines Ausgangsmaterialpulvers zum Ausbilden der durchlochten Teilchen.

16. Verfahren nach Anspruch 15, wobei mindestens 50 % des Gesamtvolumens des Ausgangsmaterialpulvers aus Ausgangsmaterialteilchen bestehen, die eine Teilchengröße von weniger als 50 Mikrometer aufweisen, gemessen durch ein Laserbeugungsverfahren, in welchem die gemessenen Teilchen als kugelförmig angenommen werden, und in welchem die Teilchengröße als volumenäquivalenter Kugeldurchmesser ausgedrückt wird.

17. Verfahren zur Ausbildung eines Pulvers nach einem der Ansprüche 1 bis 8, umfassend den Schritt: Ausbilden eines Films, der den Film durchquerende Kanäle umfasst, und Aufbrechen des Films zum Ausbilden der durchlochten Teilchen.

18. Teilchen zur Verwendung als Aktivkomponente einer Metall-Ionen-Batterie, wobei das Teilchen einen Teilchenkörper und mindestens einen durch den Teilchenkörper verlaufenden Kanal umfasst, wobei das Teilchen eine durchschnittliche Dicke von höchstens 3 µm, ein durchschnittliches Aspektverhältnis von mindestens 3:1 aufweist, und wobei der oder jeder Kanal eine Breite von mindestens 30 nm aufweist, wobei das Teilchen ein elektroaktives Material umfasst, das aus Silizium und Germanium gewählt ist.

## Revendications

1. Poudre comprenant des particules percées destinée à être utilisée en tant que composant actif d'une batterie à métal-ion, les particules percées comprenant chacune un corps de particule et au moins un passage s'étendant à travers le corps de particule ; dans laquelle les particules percées ont un rapport de forme moyen d'au moins 3:1, une épaisseur moyenne de pas plus de 3 µm et les passages ont une largeur moyenne d'au moins 30 nm ; et dans laquelle les particules percées comprennent un matériau électroactif choisi entre le silicium et le germanium.

2. Poudre selon la revendication 1 dans laquelle les passages s'étendent entre des surfaces opposées des particules percées.

3. Poudre selon la revendication 1 ou la revendication 2 dans laquelle les particules percées ont une épaisseur moyenne d'au moins 50 nm et de pas plus de 500 nm.

4. Poudre selon une quelconque revendication précédente dans laquelle les passages ont une largeur moyenne d'au moins 100 nm ; et/ou dans laquelle les passages ne constituent pas plus de 50 % du volume des particules percées ; et/ou dans laquelle les passages sont séparés d'au moins 1 µm.

5. Poudre selon une quelconque revendication précédente dans laquelle les particules percées ont une forme de paillette.

6. Poudre selon une quelconque revendication précédente dans laquelle les particules percées ont une plus grande dimension moyenne inférieure à 40 µm.

7. Poudre selon une quelconque revendication précédente dans laquelle les particules percées ont une plus petite dimension externe moyenne inférieure à 1 µm.

8. Poudre selon une quelconque revendication précédente dans laquelle une valeur de BET des particules percées est d'au moins 0,1 m²/g et inférieure à 100 m²/g.

9. Composition comprenant une poudre selon une quelconque revendication précédente et au moins un autre composant, choisi entre :
(i) au moins un autre composant actif ; et/ou
(ii) au moins un composant non actif conducteur ; et/ou
(iii) un liant.

10. Composition selon la revendication 9, dans laquelle l'au moins un autre composant actif est du graphite.

11. Électrode comprenant une composition selon la revendication 9 ou la revendication 10.

12. Électrode selon la revendication 11, dans laquelle les particules percées sont des particules de silicium et l'électrode ayant une capacité volumique à l'état chargé d'au moins 700 mAh/c.

13. Batterie à métal-ion comprenant une anode, une cathode et un électrolyte entre l'anode et la cathode dans laquelle l'anode comprend une poudre selon l'une quelconque des revendications 1 à 8 ou une composition selon la revendication 9 ou la revendication 10.

14. Procédé de formation d'une batterie à métal-ion selon la revendication 13 comprenant l'étape consistant à former l'anode par dépôt d'une suspension épaisse comprenant un solvant et une poudre selon l'une quelconque des revendications 1 à 8 ou une composition selon la revendication 9 ou la revendication 10 et faire évaporer le solvant.

15. Procédé de formation d'une poudre selon l'une quelconque des revendications 1 à 8 comprenant l'étape consistant à percer des particules d'une poudre de matériau de départ pour former les particules percées.

16. Procédé selon la revendication 15 dans lequel au moins 50 % du volume total de la poudre de matériau de départ est constituée de particules de matériau de départ ayant une taille de particule, telle que mesurée par une méthode par diffraction laser dans laquelle les particules en train d'être mesurées sont supposées être sphériques et dans laquelle la taille des particules est exprimée sous forme d'un diamètre de volume équivalent sphérique, inférieure à 50 micromètres.

17. Procédé de formation d'une poudre selon l'une quelconque des revendications 1 à 8 comprenant l'étape consistant à former un film comprenant des passages s'étendant à travers le film et casser le film pour former les particules percées.

18. Particule destinée à être utilisée en tant que composant actif d'une batterie à métal-ion, la particule comprenant un corps de particule et au moins un passage s'étendant à travers le corps de particule, la particule ayant une épaisseur moyenne de pas plus de 3 µm, un rapport de forme d'au moins 3:1 et dans laquelle le passage ou chaque passage a une largeur d'au moins 30 nm, la particule comprenant un matériau électroactif choisi entre le silicium et le germanium.
